# EUROPEAN PATENT SPECIFICATION

(11) **EP 1 012 692 B1**
(45) Date of publication and mention of the grant of the patent: **23.06.2004**
(21) Application number: 97947336.0
(22) Date of filing: 04.11.1997
(51) Int. Cl.: G06F 1/18, G06F 1/26

(54) **System for power supply of computer peripherals**
System zur Versorgung von Rechnerperipheriegeräten
Système pour alimenter des périphériques d'ordinateur

(30) Priority: 04.11.1996 US 743515; 14.02.1997 US 800397
(43) Date of publication of application: 28.06.2000
(73) Proprietor: Mobility Electronics, Inc., Scottsdale, Arizona 85260 (US)
(72) Inventor: CHARLES, Paul, Morgan Hills, CA 95037 (US); MARSH, David, Cave Creek, AZ 85331 (US); LeVEILLE, Greg, R., Monte Sereno, CA 95037 (US)
(74) Representative: Grünecker, Kinkeldey, Stockmair & Schwanhäusser Anwaltssozietät
(86) International application number: PCT/US1997/020026
(87) International publication number: WO 1998/020404

(56) References cited:
- EP-A- 0 814 399
- WO-A-95/08222
- US-A- 5 301 334
- US-A- 5 311 397
- US-A- 5 402 518
- US-A- 5 514 859
- US-A- 5 537 599
- US-A- 5 579 487
- US-A- 5 590 336
- US-A- 5 659 761
- US-A- 5 668 654

## Description

This invention pertains to a system for providing power to a digital peripheral device according to the preamble portion of claim 1.

The present invention generally encompasses interfacing computer peripherals with computers. To understand the benefits derived from the embodiments of the invention to be described herein, it is helpful to understand the existing state of the art and to see why it fails to provide the advantages and benefits of the present invention.

EP 0 814 399 A1, which is a document according to Article 54(3)EPC, discloses a device for supplying power to an external data medium reader unit connected to a computer via a standard port. The device includes an energy store means that is used to supply power to a reader unit in case the primary power source can not supply sufficient power.

WO 95-08222 discloses a system for supplying primary electrical power to modular components of an electronic equipment. The system uses a battery power source mounted either on a module or as part of a battery pack that attaches to the module. The system uses the battery pack to supplement the power provided to the modular components by a primary power source.

US 5,514,859 discloses an interface for coupling a peripheral device to a serial port of a computer. The interface allows the serial port to provide the power required by a scanner for operation. Additionally, the interface contains energy storage means that are used to supplement the energy available from the serial port in case the scanner needs supplementary power during operation.

The first improvement to be described generally pertains to portable computers, but has application with many other types of digital electronic devices. Portable computers are generally understood to include the family of computers known as laptops, notebooks and portables. They are known as portables because they are generally smaller units compared to desktop computers which can more easily be carried from place to place and used at remote locations, often away from plug-in power sources such as AC power outlets. The benefits of mobile computing can be substantial. However, it is often the case that the versatility of these portables is sacrificed for the sake of small size, lower power requirements, and generally any other considerations which make the computer portable. Therefore, peripheral components which are often a part of less easily portable desktop computer systems are not as easily integrated within a portable computer system. These same considerations also apply in the case of many other digital electronic devices.

Because space is limited within a chassis of a portable computer, and power constraints dictate that power drain must be kept to a minimum, most portable computing devices have only one bay which can be used to house only one of various peripheral devices at any given time. This bay is often referred to as a multi-function bay (also referred to herein as a peripheral bay or peripheral slot) when more than one type of peripheral can be inserted therein to communicate with the host portable computer. A floppy drive is often the default peripheral of choice to be placed in the bay because it is used nearly universally for data transfer. However, a CD-ROM drive has also become an almost indispensable peripheral for computers today. Therefore, when a CD-ROM drive is needed, the floppy drive is removed and the CD-ROM drive is inserted in its place, or swapped.

A significant drawback of the single multi-function bay portable computer described above is that only one peripheral device can be used at a time. Furthermore, it was also not mentioned that "hot-swapping", or the replacement of one peripheral device with another when the computer is operational, is typically not possible for floppy drives, CD-ROM drives and similar peripherals. Therefore, the portable computer has to be completely powered down before the swap can be made. When more than one peripheral component is needed or when the swapping of two peripherals must be executed more than once, the cycle of powering down, swapping, and then powering up again can become tedious and wasteful of time.

Therefore, it would be an advantage to provide a portable computer which can be simultaneously coupled to more than one computer peripheral which can be swapped in and out, and thus take advantage of the ability to have more than one of the computer peripherals electrically coupled to the portable computer, but without having to swap them. These advantages include the ability to have computer peripherals communicate directly with a computing device.

Another improvement pertains less specifically to the portable computer, and more to the portable computer peripherals which are swapped in and out of the single multi-function bay. Specifically, consider the situation where a portable computer is purchased with some portable computer peripherals. Typically, these portable computer peripherals are the only peripherals which will communicate with the portable computer. Notwithstanding the various reasons for this occurrence such as proprietary connectors, pinouts or timing schemes, the result is that portable computer peripherals will often only communicate with the portable computers for which they were specifically designed. Now consider that the same user also has a desktop computer. It is often the case that the same peripherals needed for the portable computer are also needed for the desktop computer. Consequently, the user is forced to buy the same peripherals for the desktop computer that were already purchased for the portable computer. The result is needless expense to the user because of redundancy in functionality of peripherals.

It would be an advantage to be able to use the portable computer peripherals with the desktop computer despite the proprietary nature common to the computer peripherals.

Another improvement pertains more specifically to a portable computer and other portable computing devices. The desire within the industry to provide an easily portable and high density, removable mass storage medium contributed significantly to the success of the ZIP™ drive manufactured by Iomega Corporation (hereinafter "Iomega'') . The ZIP™ drive is comprised of a drive unit which stores data to removable ZIP™ disks. Slightly thicker than the ubiquitous three and one half inch 1.44 Megabyte floppies in use today, one ZIP™ disk is nevertheless able to store about 100 Megabytes of data, or the storage capacity of roughly the equivalent of seventy 1.44 Megabyte floppies. The ability to store a large quantity of data or much larger single files on a single removable storage medium is very advantageous. Consequently, desktop computers are beginning to include them as standard equipment which comes with a basic desktop computer system. However, portable computers have not been able to take advantage of removable ZIP™ drive capacity because of the interface requirements of the multi-function bay of the portable computer, and the size constraints therein, and the power requirements. Therefore, it would be another advantage over the prior art to adapt a ZIP™ drive or other removable, high density storage medium for use with a portable computer or other computing device to take advantage of inexpensive and removable mass storage capabilities.

In accordance with an improvement of the present invention, provision is made to provide additional current supplying capacity to a computer peripheral, such as a ZIP**™** drive, at times when the current supplied by the portable or desktop computer interface is not sufficient. For example, the current available under some interface standards may be less than that intermittently required by a computer peripheral, for example a ZIP™ drive. Embodiments of the present invention provide supplementary current to a peripheral device in order to maintain the operation of the peripheral when necessary.

It is an object of the present invention to provide a system for efficiently powering computer peripherals which intermittently require more power than is supplied by the interface standard used by the computer.

In accordance with the present invention there is provided a system for providing power to a digital peripheral device having the features of claim 1.

The following improvements can be achieved independently from the present invention. A single interface slot on a computing device is electrically coupled to an interface port of an external docking bay comprised of a plurality of interface slots or ports to adapt and interconnect computer peripherals. Portable peripherals are electrically coupled to the ports of the external docking bay. The computing device is then able to access all of the peripheral devices in the external docking bay which are normally only accessible one at a time when electrically coupled to a port in a multi-function bay made for receiving a single computer peripheral in the portable computer.

The single interface slot to which the external docking bay is electrically coupled is not necessarily the dedicated multi-function port. In other words, a PC card slot (also known as a PCMCIA slot) can also be used to electrically couple the external docking bay to the portable computer.

It is also possible to overcome the proprietary characteristic of some interfaces between computer peripherals, particularly portable computer peripherals, and the computer, particularly portable computers and other computing devices. In other words, the system can be used where a variety of different proprietary interface standards are encountered.

The system also allows to use an external docking bay which can be electrically coupled to a hard drive which is incompatible with the IDE interface or some other standard interface which is normally used by the portable computer or other computing device. This enables the external docking bay to act as an interface to the portable computer for devices which could not otherwise be coupled thereto.

The system provides the capability of electrically coupling portable computer peripherals to a desktop computer or an expansion chassis. An internal docking bay is provided for insertion within a slot or port of the desktop computer. The internal docking bay is thereby electrically coupled to a communications bus within the desktop computer. The internal bay also provides a port which is compatible with an interface port of a portable computer peripheral. The desktop computer is thus able to interface with the portable computer peripherals as if they were inserted into the portable computer. The portable computer peripherals can still be swapped out of the desktop computer and into the portable computer when they are needed there.

It is also possible to electrically couple a specific desktop peripheral with a portable computer. Specifically, ZIP™ drives manufactured by Iomega are an increasingly popular removable, high density, mass storage device. However, no proprietary ZIP™ drives have been manufactured which will fit within the chassis of a portable computer. This is probably because a ZIP™ drive disk is significantly thicker than a compact disk (CD-ROM) or 1.44 Megabyte floppy. The present invention overcomes the challenge of electrically coupling a ZIP™ drive to a portable computer interface port such as a multi-function port within a multi-function bay.

Another possibility is to provide a tape drive backup unit which is electrically coupled to the portable computer interface port within the multi-function bay.

An aspect of the present invention is to provide a system for efficiently powering computer peripherals, such as ZIP™ drives, which intermittently require more power than is supplied an interface standard, such as the PCMCIA interface standard, used by computers.
Figure 1 is a perspective illustration of the external casing of a first external docking bay shown in an upright position with a second external docking bay shown in phantom image.
Figure 2 shows a perspective view of the two external docking bays shown in figure 1, now electrically coupled to a portable computer via a PC card (PCMCIA) slot.
Figure 2A is a perspective view of a first exemplary peripheral device including a ZIP™ drive.
Figure 2B is perspective view of a second exemplary peripheral device including a ZIP™ drive.
Figure 2C is a peripheral view of the exemplary peripheral device represented in figure 2A ready to be inserted into one of the external docking bays represented in figure 1.
Figure 2D is an exploded perspective view of the external peripheral device bay represented in figure 1.
Figure 3 is a flow chart showing a method of operation of the system shown in figure 1.
Figure 4 is a modification to the flow chart of figure 3 which explains how to compensate for proprietary communications.
Figure 5 is an illustration in perspective of an external hard drive unit which is electrically coupled to the external docking bay 10 so as to be used by the portable computer with which it cannot typically communicate.
Figure 6 shows that portable computer peripherals can also be used on a desktop computer.
Figure 7 shows a system that enables a drive utilizing a portable, high density, removable storage medium to be constructed to fit with the multi-function bay 36 and therefore be utilized as other portable computer peripherals.
Figure 8 is a block diagram showing the accommodation of one or more interfaces which are available in the industry.
Figure 9 is a block diagram of another system which includes a power management features.
Figure 10 is a detailed schematic diagram showing one preferred arrangement for implementing the power management feature represented in figure 9.
Figure 11 is a detailed schematic diagram showing an arrangement for adapting a peripheral device to the PCMCIA standard.

Reference will now be made to the drawings in which the various elements of the preferred embodiments of the present invention will be given numerical designations and in which the preferred embodiments of the invention will be discussed so as to enable one skilled in the art to make and use the invention.

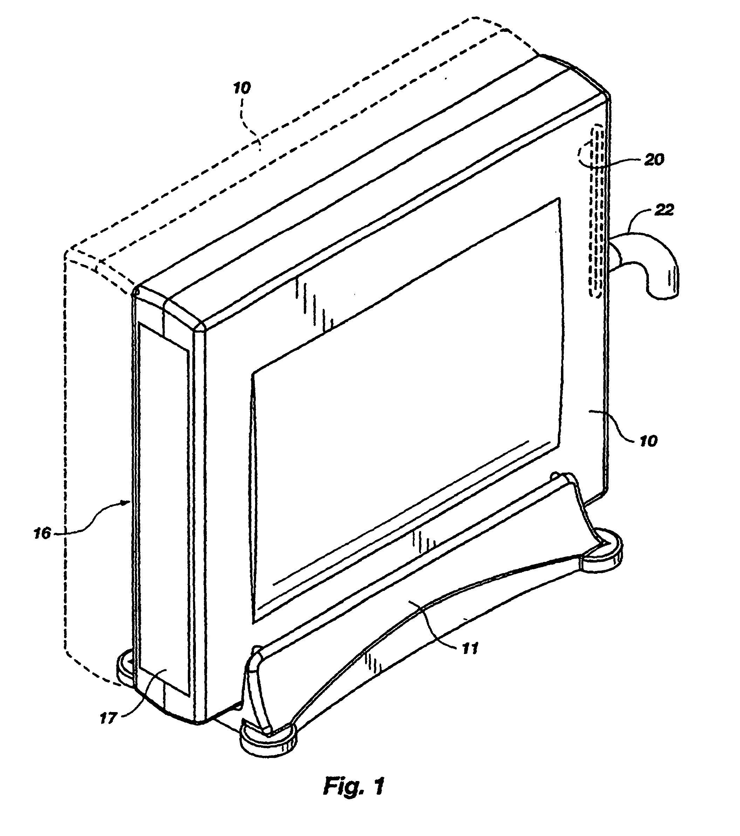

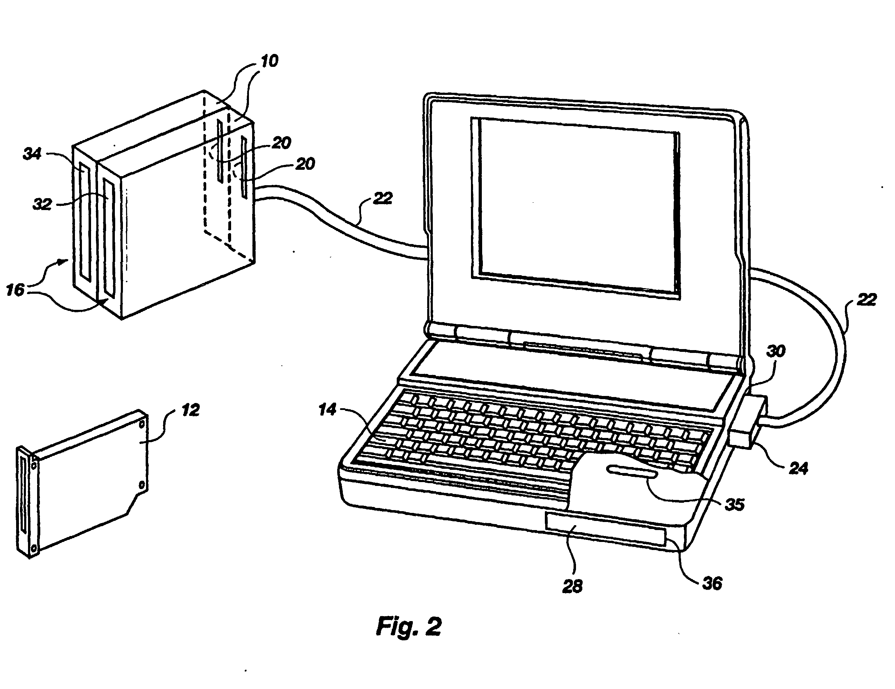

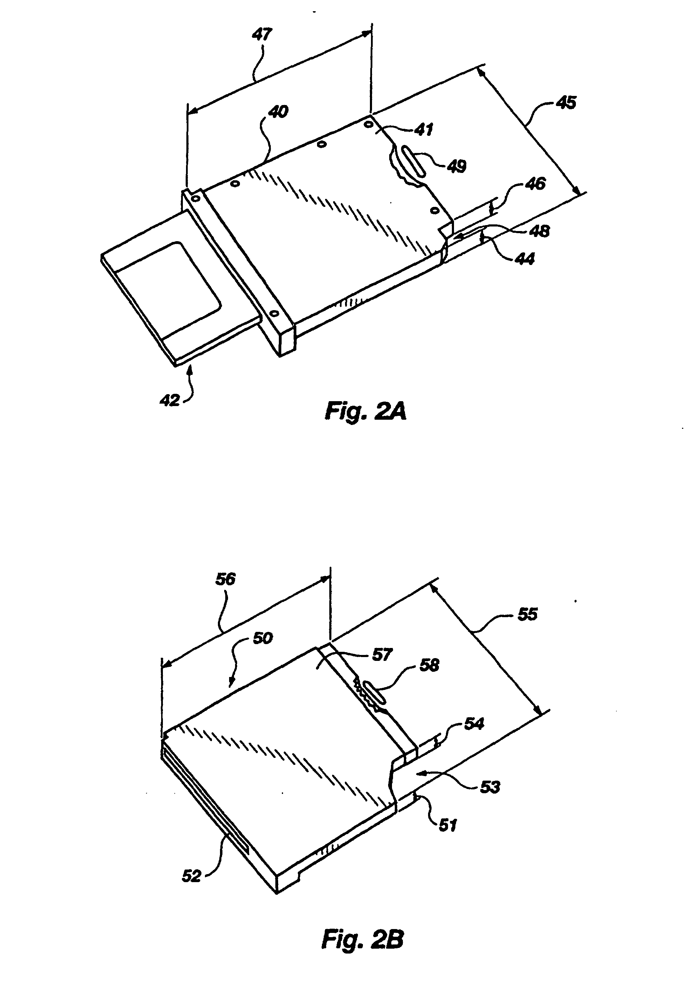

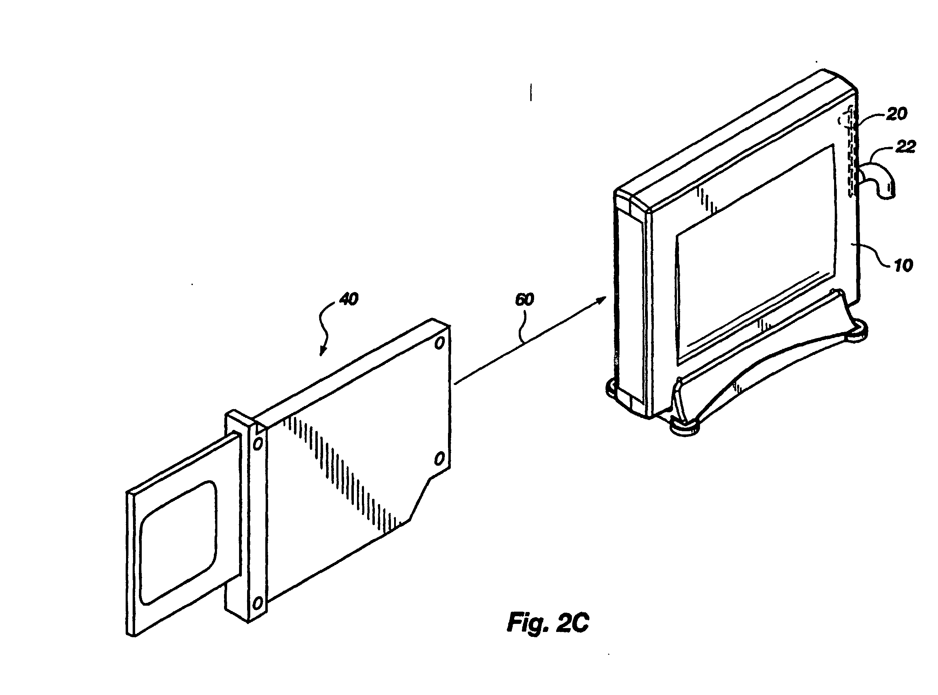

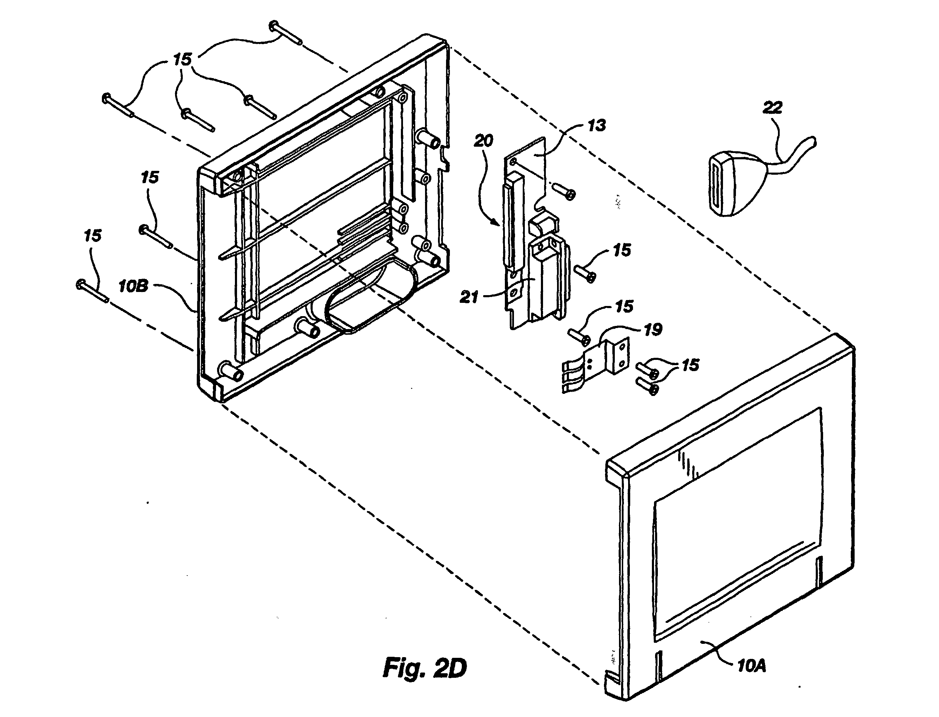

Figure 1 shows an external docking bay 10. A second, identical, external docking bay is also shown in phantom image in figure 1. The single external docking bay 10 pictured is designed to enable a single portable computer peripheral 12 to be electrically coupled to a portable computer 14 (see figure 2) or to some other computing device. As shown in figure 1, a stand 11, is provided to hold the external docking bay 10.

In an exemplary illustration, the portable computer 14 is a notebook computer manufactured and/or sold by such industry leaders in computer notebooks such as IBM Corporation ("IBM"), Compaq Computer Corporation ("Compaq") or Toshiba America Information Systems, Inc. ("Toshiba"). The external docking bay 10 is comprised of an insertion end, generally designated at 16, and also a bay door 17 where the portable computer peripheral 12 is inserted into the external docking bay 10. Within the external docking bay 10 at an opposing coupling end 18 is an interface port, diagrammatically represented at 20.

As shown best in figure 2, the portable computer peripheral 12 is electrically coupled to the interface port 20 because the interface port 20 is constructed to be substantially identical in physical dimensions and pinouts to a multi-function port 35 in the multi-function bay 36 of the portable computer 14. The interface port 20 is electrically coupled to a cable 22 which is also electrically coupled to a coupling device 24 shown partially inserted into the portable computer 14. The coupling device 24 (here configured as a PC card) enables the external docking bay 10 to be electrically coupled to the portable computer 14 at a portable computer interface port 30 (figure 2).

It should be noted that the external docking bay 10 is constructed to receive portable computer peripherals 12 which are designed to fit within a multi-function bay 36 of the portable computer 14 without modification. Therefore, the pertinent dimensions the external docking bay 10 are the same as those of a multi-function bay 36 in the portable computer 14.

It will also be appreciated that the two or more external docking bays 10 shown in figure 1 can be joined together as shown by the phantom image of an external docking bay 10 in figure 1 and as shown in figure 2. Advantageously, a plurality of portable computer peripherals 12 can therefore be simultaneously coupled to the portable computer 14. One of the benefits of this configuration is that instead of having to swap portable computer peripherals 12 by shutting down the computer, replacing the current portable computer peripheral 12 with the desired portable computer peripheral 12, and then rebooting, all portable computer peripherals 12 are available without swapping. Moreover, the system is capable of "hot swapping" of peripherals. A management for the use of data communication lines within the cable 22 when two or more external docking bays 10 are coupled together is used. A communication management between two or more external docking bays 10, which is similar to bus arbitration techniques can be used, as known to those skilled in the art. Arbitration techniques determine which devices are able to use bus lines and when.

Still referred to figure 2, an illustration of an exemplary situation of the system described in figure 1 will be provided. When a user has a floppy drive unit 28 presently installed in a multi-function bay 36 of the portable computer 14, this system enables simultaneous use of another portable computer peripheral 12, for example a CD-ROM drive unit 32 which is inserted into the external docking bay 10. Normally, the user has no option but to remove the floppy drive unit 28 and install the CD-ROM drive unit 32 in the multi-function bay 36. But in this case, the external docking bay 10 is simultaneously coupled via a specific computer interface port. A PC card slot 30 is used on the portable computer 14 as the interface between the portable computer 14 and the external docking bay 10. Those skilled in the art will appreciate that any appropriate port can be used as the portable computer interface port 30. However, the PC card (PCMCIA) port 30 is an almost universally available interface standard on portable computers. An added benefit of using the PC card slot 30 as the interface for the external docking bay 10 is that the multi-function bay 36 of the portable computer 14 can still be used.

Two external docking bays 10 are shown coupled together in figure 2 so as to have the ability to simultaneously accept two computer peripherals 12. The CD-ROM drive unit 32 is inserted into the external docking bay 10 at the insertion end 16 until it is electrically coupled to an associated interface port 20 within.

For illustration purposes, the remaining interface port 20 within external docking bay 10 is shown having a tape drive backup unit 34 installed therein. However, those skilled in the art will appreciate that the tape drive backup unit 34 is optional. In other words, the interface ports 20 within the external docking bay 10 do not have to be filled for proper operation of the portable computer 14. One or both of the interface ports 20 can be empty when the portable computer 14 is booted. However, in some cases, to be able to use portable computer peripherals 12 other than the one installed in the multi-function bay 36, it may be necessary to install the portable computer peripherals 12 in the external docking bay 10 before booting the portable computer 14.

Assuming that the CD-ROM drive unit 32 and the drive backup unit 34 were installed in the external docking bay 10 before booting the portable computer 14, all three portable computer peripherals 12 are now accessible by the portable computer 14. For example, data stored on a CD in the CD-ROM drive unit 32 can advantageously be copied directly to a floppy disk in the floppy drive unit 28. Likewise, data stored in an internal hard disk 38 within the portable computer 14 can advantageously be copied directly to the tape drive backup unit 34 in the external docking bay 10. A portable computer running a multitasking operating system can even execute the data transfer and copying processes described above simultaneously. It is also preferred that the peripherals which are accommodated by the external docking bays be "hot swappable."

Reference will next be made to figure 2A. Figure 2A is a perspective view of a peripheral device, generally designated at 40. The peripheral device 40 is a mass storage device which is compliant with the standard promulgated by Iomega and known in the industry as a ZIP™ drive and which receives a disk, designated at 42, known in the industry as a ZIP™ disk.

The peripheral device 40 is particularly configured to be received into the multi-function bay 36 (see figure 2) of a computer manufactured by Toshiba. The peripheral device 40 includes an enclosure or a housing 41. The housing 41 has a length 47, a width 45, and a thickness 46 all of which is specific to peripherals which are to be received into the multi-function bay 36 of computers complying with the pertinent standard promulgated by Toshiba. The housing 41 includes a lip 48 which extends from one side of the housing 41 and has a thickness 44 which is less than the thickness represented at 46. An electrical connector 49 is provided to make electrical connection with a corresponding electrical connector (represented at 35 in figure 2) provided within the multi-function bay 36 of a computer complying with the multi-function bay standard of Toshiba or within the external docking bay 10 (figure 2) complying with the multi-function bay standard of Toshiba.

Reference will next be made to figure 2B. Figure 2B is a perspective view of another peripheral device, generally designated at 50. The peripheral device 50 is also a mass storage device which is compliant with the standard promulgated by Iomega and known in the industry as a ZIP™ drive which receives a ZIP™ disk.

The peripheral device 50 is particularly configured to be received into the multi-function bay 36 (see figure 2) which complies with the standard promulgated by IBM. The peripheral device 50 includes an enclosure or a housing 57. The housing 57 has a length 56, a width 55, and a thickness 54, all of which is specific to peripherals which are to be received into the multi-function bay 36 of computers complying to the standard promulgated by IBM. The housing 57 includes a lip 53 which extends from one side of the housing 57 and has a thickness 51 which is less than the thickness represented at 54. An electrical connector 58 is provided to make electrical connection with a corresponding electrical connector (represented at 35 in figure 2) provided within the multi-function bay 36 of a computer complying with the multi-function bay standard of IBM or within the external docking bay 10 (figure 2) complying with the multi-function bay standard of IBM.

Peripheral devices which comply with the multi-function bay standard of any number of different organizations and manufacturers can be arrived at using the teachings set forth herein. Among the steps to be carried out are : 1) Providing a housing for the peripheral device which physically fits within the multi-function bay adhering to the pertinent standard; 2) Providing an electrical connector which is compatible with the corresponding electrical connector provided in the pertinent multi-function bay; and, 3) Providing a translation interface so that translation of communications between a first interface standard and a second interface standard can occur so that an operative link between the host computer and the peripheral is established and maintained. One skilled in the art can use these steps to arrive at peripheral devices which operate within the multi-function bays adhering to any number of different standards.

Reference will next be made to figure 2C. Figure 2C is a perspective view of the peripheral device 40 represented in figure 2A ready to be inserted into the external peripheral device bay represented in figure 1 as indicated by arrow 60. As will be appreciated by those skilled in the art, the peripheral device 40 is inserted and removed from the device bay in accordance with the standard promulgated by appropriate manufacturer or organization.

Figure 2D is an exploded perspective view of one external peripheral device bay 10 represented in figure 1. Those skilled in the art will appreciate that the same pertinent structures can be adapted for use internally to a computing device, such as a desktop computer.

As will now be appreciated from an understanding of the foregoing, the interface port 20 will change according to the standards promulgated by different manufacturers and different organizations. In the case of one preferred peripheral device, adhering to the standard promulgated by Toshiba, the interface port is a 50 conductor connector having the following pin assignments:

| Pin | Assignment |
|---|---|
| 1-40 | ATAPI Interface |
| 41, 42 | +5 volts |
| 43-44 | GND |
| 47 | Audio Right |
| 48 | Audio GND |
| 49 | Audio Left |
| 50 | Audio GND |

Represented in figure 2D are a first half housing 10A and a second half housing 10B. The first half housing 10A and the second half housing 10B are joined together using some of the screws indicated at 15 such that peripheral devices, such as the peripheral device 40 (figure 2A) and the peripheral device 50 (figure 2B) can be received therein. In particular, the arrangement illustrated in figure 2d can securely receive and hold a peripheral device and the arrangement illustrated in figure 2D is particularly configured to receive peripherals complying with the standards promulgated by Toshiba. A circuit board 13 includes the interface port 20 and a cable connector 21 which receives cable 22. A spring 19 is included to make a ground connection with the peripheral device in accordance with the standard promulgated by Toshiba. Some of screws 15 are used to secure the structures together.

From the forgoing, it will be appreciated that docking bays which can be used with, and which comply with, the peripheral standards of any number of different organizations and manufacturers can be arrived at using the teachings set forth herein. Among the steps to be carried out are: 1) providing a housing for the peripheral docking bay which physically receives the peripheral, 2) Providing an electrical connector in the peripheral docking bay which is compatible with the corresponding electrical connector provided on the peripheral; and, 3) Providing a translation interface so that translation of communications between a first interface standard and a second interface standard can occur so that an operative link between the host computer and the peripheral is established and maintained. One skilled in the art can use these steps to arrive at docking bays which receive peripherals which comply with any number of different standards.

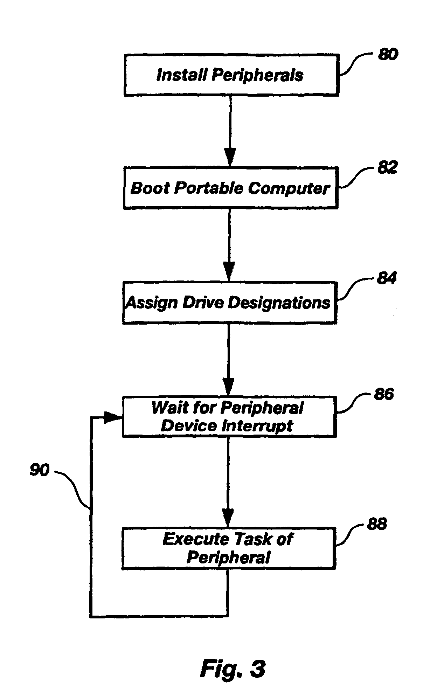

Figure 3 is a flow chart showing one general method of operation of the system illustrated in figure 1.

Figure 3 begins with step 80 where all desired portable computer peripherals 12 are installed in an external docking bay 10 having an appropriate number of bays. It should be mentioned that although it was explained earlier that none or as a few as one of the external docking bays 10 need to be filled for the portable computer 14 to operate, the same is true for the multi-function bay 36 of the portable computer 14. The multi-function bay 36 can be empty and the operation of the portable computer 14 will not be affected.

Step 82 requires that the portable computer 14 be rebooted. The portable computer peripherals 12 are now all simultaneously available to the user. The operating system and/or a hardware component such as a bus controller of the portable computer 14 assigns a unique drive designation to each of the portable computer peripherals 12 in step 84 so that they can be accessed accordingly. For illustration purposes only, the portable computer peripheral 12 in the multi-function bay could always be assigned the designation "C:", the first peripheral in the external docking bay 10 could always be assigned the designation "D:", and so forth until the last portable computer peripheral 12 in the external docking bay 10 is assigned a drive designation. If there is no portable computer peripheral 12 in the multi-function bay 36, then the first portable computer peripheral 12 in the external docking bay 10 will receive the drive designation "C:" and so on as before.

Step 86 encompasses the concept of deciding which of the portable computer peripherals 12 the portable computer 14 is going to communicate with, and when. For example, an interrupt-type method of communication is chosen. When a portable computer peripheral 12 requires communication with the portable computer 14 or another portable computer peripheral 12, an interrupt can be set which designates the appropriate portable computer peripheral 12 as requiring attention for the portable computer 14.

Step 88 shows that once the portable computer 14 has determined that one of the portable computer peripherals 14 requires attention, a predetermined amount of time is devoted to responding to the portable computer peripheral's 12 task. The predetermined amount of time might require repeated interruptions of the task while other functions of the portable computer 14 are carried out. Those skilled in the art will appreciate that the function described can be executed in many different ways. However, the portable computer 14 and its operating system can be assumed to already possess the ability to control a plurality of portable computer peripherals 12 already. This should be clear in that the functionality added is an extension of the portable computer's 14 ability to share bus time and perform other task for an internal hard drive 38 and floppy drive unit 28 which are already typically installed in the portable computer 14 (see figure 2).

Line 90 is also included to indicate that the portable computer 14 is always looping back to check on a status of other portable computer peripherals 12, if any, after a task is completed, or even during a task if the portable computer 14 and operating system enable such an interruption. It will be appreciated by those skilled in the art that peripheral device status checking is accomplished by numerous methods.

The impetus for communication between the portable computer peripherals 12 and the portable computer 14 in step 84 can be replaced with a polling scheme. The portable computer 14 will actively poll all portable computer peripherals in a rotating fashion, basically asking each peripheral if it requires communication. If not, the portable computer 14 queries a next portable computer peripheral 12 in an endless loop. The loop is only interrupted when a portable computer peripheral 12 requires attention, and then perhaps only in small segments of time until the portable computer peripheral 12 no longer requires attention from the portable computer 14 when its task is complete.

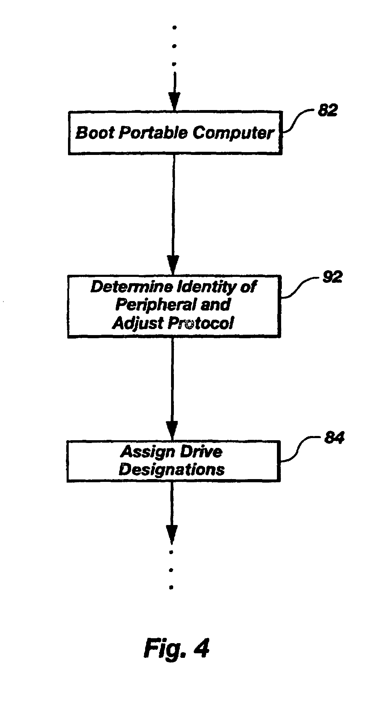

Figure 4 shows an additional step 92 which is inserted between the steps 82 and 84. The portable computer 14 makes a determination upon bootup about which type of portable computer peripherals 12 are electrically coupled to the external docking bay 10. While the interface port 20 may have the same arrangement of pins for the many different models or computer manufacturers of portable computers 14, the signals on the pins may differ significantly. Therefore, it is possible to determine at an appropriate time what type of computer peripheral 12 the portable computer 14 will be communicating with. The external docking bay 10 can then make the appropriate adjustments to compensate for changes in signal assignments on pins of various portable computer peripherals 12. It is also envisioned that some portable computer peripherals 12 use the same pinout configurations, but that signal timing is altered. Therefore, the system is prepared to compensate for these timing differences or pinout variations by an appropriate method known to those skilled in the art. For example, a signal which must be generated on a particular line for a certain length of time, as required by the portable computer 14, can be extended by the external docking bay 10 if the portable computer peripheral 12 otherwise drops the signal too early. Likewise, the external docking bay 10 can also cut signal short in the same manner.

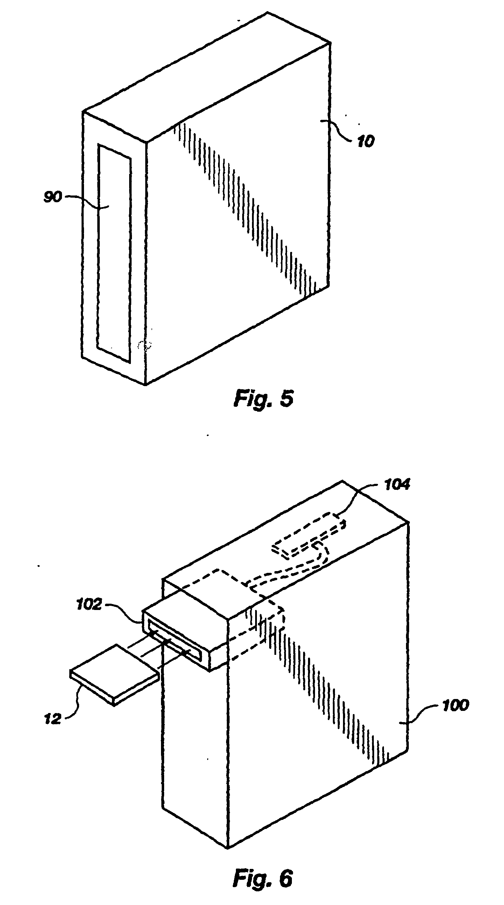

Figure 5 shows that an external hard drive unit 90 is electrically coupled to the external docking bay 10. There are some hard drives which do not conform to typical bus interfaces because they are much larger than a typical hard drive. The external docking bay 10 can be used as an interface between the bus of the portable computer 14 and the hard drive 90. It should be appreciated by those skilled in the art that another advantage therefore is the ability to function as an interface to the portable computer 14 for peripherals which are not normally compatible.

Figure 6 illustrates that portable computer peripherals 12 can also be used on a desktop computer 100, and thereby avoid duplicate but otherwise necessary and expensive proprietary purchases to outfit both a portable computer 14 and the desktop computer 100 with the same peripherals. It should be realized that this example has application for use in an expansion chassis (not shown) as well.

Figure 6 shows that an internal docking bay 102 is electrically coupled to an internal bus slot 104 of the desktop computer 100 by any appropriate means such as direct connection or via a cable, and shown here in a tower or mini-tower configuration. The bus used by the desktop 100 can be any of those commonly used today such as ISA, BISA, Microchannel, VESA, and PCI and which are known to those skilled in the art. Similarly, ATAPI, PCMCIA, parallel, serial, SCSI or FireWire peripheral connections might also be used to couple the internal docking bay 102 to the desktop computer 100. The internal docking bay 102 provides an interface between the signals being used by the computer peripheral 12, and the industry standardized bus signals used by the desktop computer 100. It is envisioned that an internal docking bay 102 would be purchased for using the computer peripherals 12 of only a particular computer manufacturer. All of the computer peripherals 12 would then be able to function on the desktop computer 100 from within the internal docking bay 102. Alternatively, more than one internal docking bay 102 can be included in the desktop computer 100, each internal docking bay 102 adhering to a different interface standard.

One benefit that is immediately realized from this is the advantage of using the same computer peripherals 12 with the desktop computer 100 and the portable computer 14.

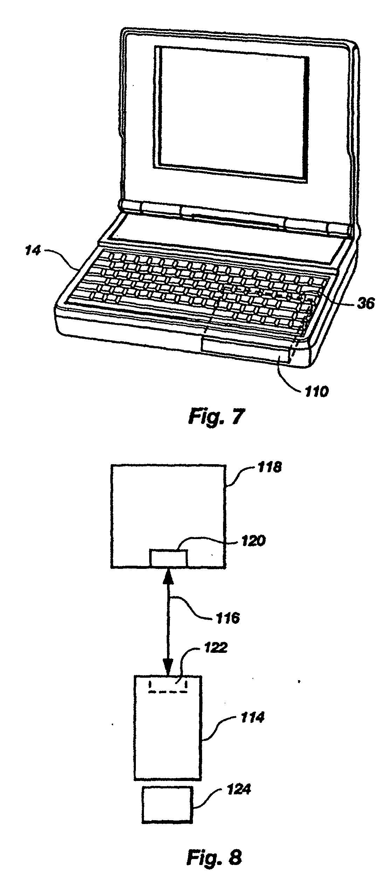

Next, figure 7 eaches the installation of a drive 110 which utilizes an easily portable, high density, removable storage medium. An example of such a drive and storage medium are the ZIP™ drive as disclosed previously. The ZIP™ drive 110 has been constructed such that it is able to fit within the multi-function bay 36. Likewise, the ZIP™ drive 110 can be used in the external docking bay 10 (figure 1) and the internal docking bay 102 (figure 6) of previously described systems.

It is also possible to accommodate one or more industry standard interfaces. Represented diagrammatically in figure 8 is a computer device 118 as is known in the industry or which may become available in the future. The computing device 118 can include one or more industry standard interfaces such as those known as PCI, PCMCIA, CardBus, IEEE 1284 and/or FireWire (IEEE 1394). The hardware and/or software necessary to implement these industry standards is represented by the interface 120 in figure 8.

The signals which are conveyed by the interface 120 are communicated by a link 116 which may be a hardwired link or a wireless link, in accordance with which the industry standard interface 120 adheres. Wireless links within the scope of the present invention can be those which adhere to an industry standard infrared communication protocol or to a proprietary infrared communication protocol. Furthermore, wireless links which adhere to an industry standard radio frequency protocol or to a proprietary radio frequency communication protocol can also be used.

Represented in figure 8 is an adaptable docking bay 114 which preferably substantially includes the features and structures described in connection with docking bay 10 described earlier. The adaptable docking bay 114 also includes an adaptable interface which can accommodate any one or more than one industry standard interface such as ISA, PCI, PCMCIA, CardBus, and/or FireWire so that reliable and efficient communication between the adaptable docking bay 114 and the computing device 118 can occur. More information on the FireWire standard can be obtained from the IEEE 1394 standard.

As explained above, the docking bay 10 receives one of a number of different peripherals. In the case of the adaptable docking bay 114, a peripheral 124 is received into the adaptable docking bay 114. The peripheral 124 may be any number of different types of devices, such CD-ROM drives, disk drives, and many other different types of devices. Such devices may require different industry standard interface. Thus; the peripheral 124 may require an interface such as an IDE interface, an ATAPI interface, FireWire interface, SCSI interface, or another interface.

Represented in figure 8 is an interface adapter represented at 122. The interface adaptor 122 includes the hardware and/or software which is necessary to allow data and instructions to be transferred between two dissimilar standards. For example, the interface adapter 122 allows communication to efficiently occur between one or more of the following standards, all of which are well known in the industry: PCCard, PCI, Parallel, IEEE 488, Serial, RS-232, PS/2, PCMCIA, CardBus, FireWire, IDE, ATAPI, or some proprietary interface which one or more particular manufacturers have adopted or may adopt in the future. Thus, it will be appreciated that if the peripheral 124 requires an IDE/ATAPI interface, the interface adaptor 122 can preferably provide adaptable communication in accordance with the FireWire interface, if that is the standard with which the computing device 118 is equipped. It is to be understood that many different types of computing device can be used, not just the computing device 118 represented in figure 8.

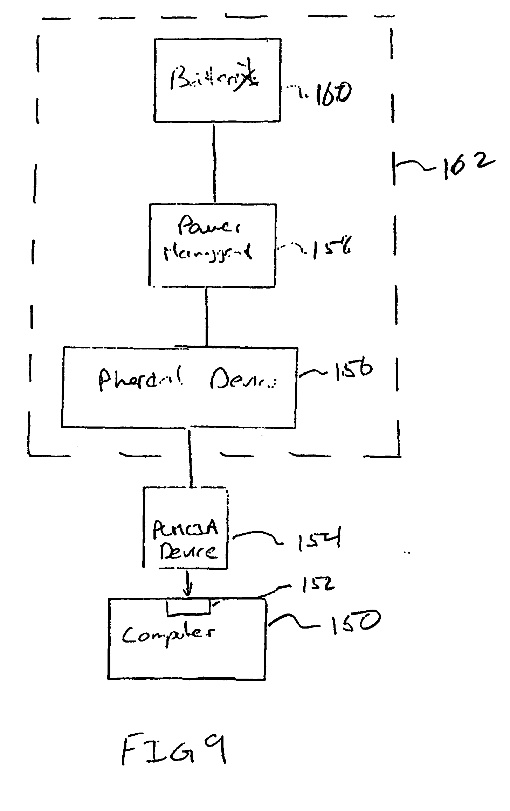

Reference will next be made to figure 9 which is a block diagram. As discussed above, many computing peripherals have not been designed considering portability. Many computing peripherals are designed to operate assuming that a high current source is available to operate the peripheral. The present invention advantageously provides a system for providing power to peripherals which provides advantages not previously available.

Figure 9 provides a block diagram including a computer indicated at 150. As intended herein, the computer 150 can be any device which stores, manipulates, or utilizes data, for example, portable computers, desktop computers, personal digital assistants (PDAs), still digital cameras, video cameras, and so forth. The computer 150 includes a PC card slot 152 which is compliant with the pertinent PCMCIA standard, as is well known in the industry. A PCMCIA device 154 is inserted into the PC card slot 152 to provide an interface between the computer 150 and a peripheral device 156 so that operation and communication can occur therebetween. As is known in the industry, the PCMCIA standard requires that five volts be provided at the PC card slot 152 and the standard requires that only 800 milliamps be provided.

As explained earlier, the PCMCIA device preferably provides an interface between the standard used by the peripheral device 156 (for example the ATAPI standard) and the standard used by the computer 150 (for example the PCMCIA standard). The PCMCIA device 154 passes through the five volts to the peripheral device 156.

Many peripheral devices nominally draw less than 800 mA during operation. Nevertheless, intermittently during the peripheral's operation, the peripheral may draw more than 800 mA. During times when the peripheral draws more than 800 mA, the PCMCIA standard does not assure that the current provided via the PC card slot 152 will be great enough to properly operate the peripheral. Thus, a power management unit 158 is provided in accordance with the present invention.

The power management unit 158 can be housed in the same enclosure, represented by the dashed line 162, as the peripheral device 156, or can be separately housed. Also represented in figure 9 is a battery 160. The battery 160 can be any power storage device and is preferably a rechargeable electrochemical cell. For example, the battery 160 can comprise one or more nickel-cadmium cells, one or more nickel-metal-hydride cells, or one or more lithium-ion cells. The battery 160 is also preferably housed within the enclosure 162. The enclosure 162 can preferably be the housing of the external docking bay 10 (figure 1) or the housing of the ZIP™ drive 110 which fits within the multi-function bay 36 (figure 7). Alternatively, the battery 160 and/or the power management unit 158 can be located outside of the enclosure 162.

The power management unit 158 monitors the current which is drawn by the peripheral device 156 from the PC card slot 152 through the PCMCIA device 154. As the current drawn by the peripheral device 156 nears and exceeds a predetermined threshold, the power management unit 158 draws current from the battery 160 to supplement the current drawn from the PC card slot 152 so the peripheral device 156 will have adequate current for proper operation. It is also within the scope of the present invention for the power management unit to recharge the battery 160 when the current drawn by the peripheral device 156 falls below the predetermined threshold. The battery 160 can also preferably be charged via an external source, such as a power supply connected to an AC current supply (not represented in the figures).

In the preferred embodiment of the present invention described herein, the predetermined threshold is preferably in the range from about 500 mA to about 800 mA, more preferably about 600 mA to about 700 mA, and most preferably is 650 mA. It will be appreciated that the predetermined threshold can be different than that specified herein and still fall within the scope of the present invention. It will be appreciated that the present invention provides advantages not heretofore available in the art.

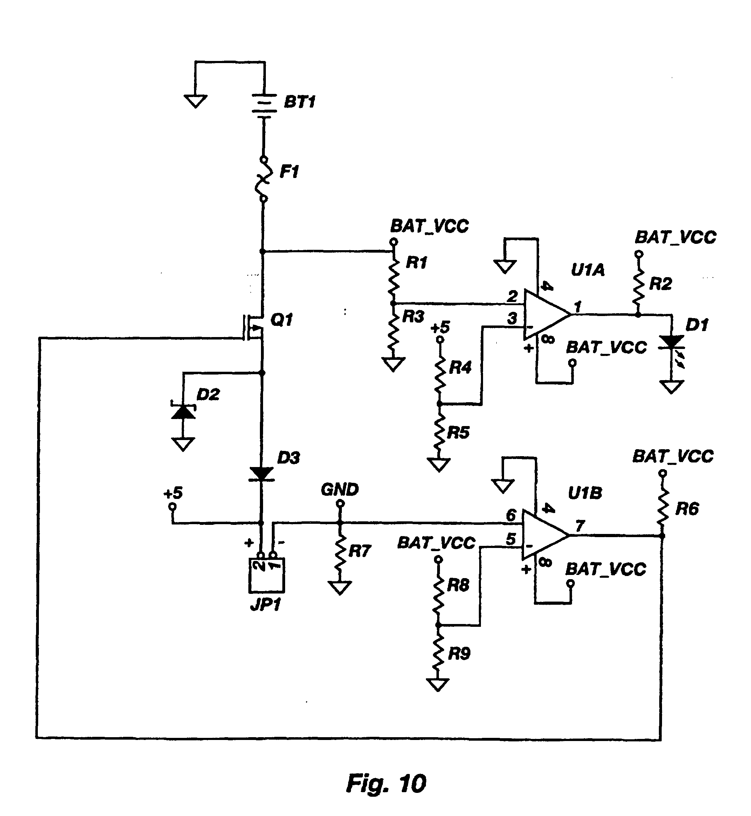

Reference will next be made to figure 10 which is a detailed schematic diagram showing one preferred arrangement for implementing the power management feature represented in figure 9. It is to be appreciated that the detailed schematic diagram of figure 10 is not to be considered limiting of the scope of the present invention but is to be considered merely exemplary of the many different embodiments which can incorporate the present invention. The components represented in figure 10 correspond to those components which carry out the functions of the battery (160 in figure 9) and the power management unit (158 in figure 9). For purposes of clarity, the reference designations which are customarily included in detailed schematic diagrams have been retained. Table A, below, provides a description of the preferred components represented in Figure 10.

**TABLE A**

| Figure 10 | |
|---|---|
| Reference Designation | Description |
| BT1 | Nickel-Cadmium Battery |
| F1 | Fuse |
| R1 | 470K |
| R3 | 100K |
| U1A | LM393 |
| R2 | 4.7K |
| D1 | LED |
| R4 | 400K |
| R5 | 100K |
| D2 | 1N5235A |
| Q1 | MTP12P10 |
| JP1 | Power connector to peripheral device |
| R7 | .1 |
| R8 | 82.5K |
| R9 | 1K |
| U1B | LM393 |
| R6 | 4.7K |

Upon examination of figure 10 it will be appreciated that the circuit represented therein is just one example of a means for detecting when the current drawn by the peripheral device exceeds a predetermined threshold and for supplying supplementary current to the peripheral device. It is to be understood that many different structures can carry out the functions of detecting when the current drawn by the peripheral device exceeds a predetermined threshold and for supplying supplementary current to the peripheral device and all such structures and arrangements which perform the same or equivalent functions are to be considered within the scope of the means for detecting when the current drawn by the peripheral device exceeds a predetermined threshold and for supplying supplementary current to the peripheral device.

In view of the forgoing, it will be appreciated that the power management aspect of the present invention has utility with many different types of peripheral devices, both those which are presently available and which will become available in the future. An example of a peripheral device which will shortly become available is the n•hand disk drive which has been announced by Iomega which will use magnetic disks which are smaller than ZIP™ disks (current specification 2 inches by 2 inches) and which are expected to hold 20 MB of data and which are suited for applications which currently require flash memory cards.

The n•hand device is particularly suited for inclusion in apparatus such as Personal Digital Assistants (PDAs) and other miniature digital electronic devices. Devices such as PDAs are often designed to consume very little power in order to maximize battery life while using small battery cells. Thus, such devices may only be able to provide as little as, for example, 200 mA, 100 mA, or 50 mA to a peripheral device. Devices such as PDAs may comply with the PCMCIA interface standard except for being unable to provide the current which is otherwise expected under the PCMCIA interface standard. Those skilled in the art will readily be able to modify the structures disclosed herein, and to arrive at new structures using the teachings presented herein, to provide power management for peripheral devices which could not otherwise be reliably and conveniently used with low power digital electronic apparatus. Thus, depending upon the peripheral device and the apparatus to which it is connected, the capacity of the battery (or other power storage component) shown in figure 10 may be altered as well as altering the threshold at which supplementary current provided to the peripheral and how much current is provided to the peripheral.

In view of the new peripherals and technologies which will be introduced in the future, it is to be understood that systems providing the power management features just described may be different than that represented in figure 10. In particular, the voltage and current values which are applicable with other peripheral devices may be different than those specified herein.

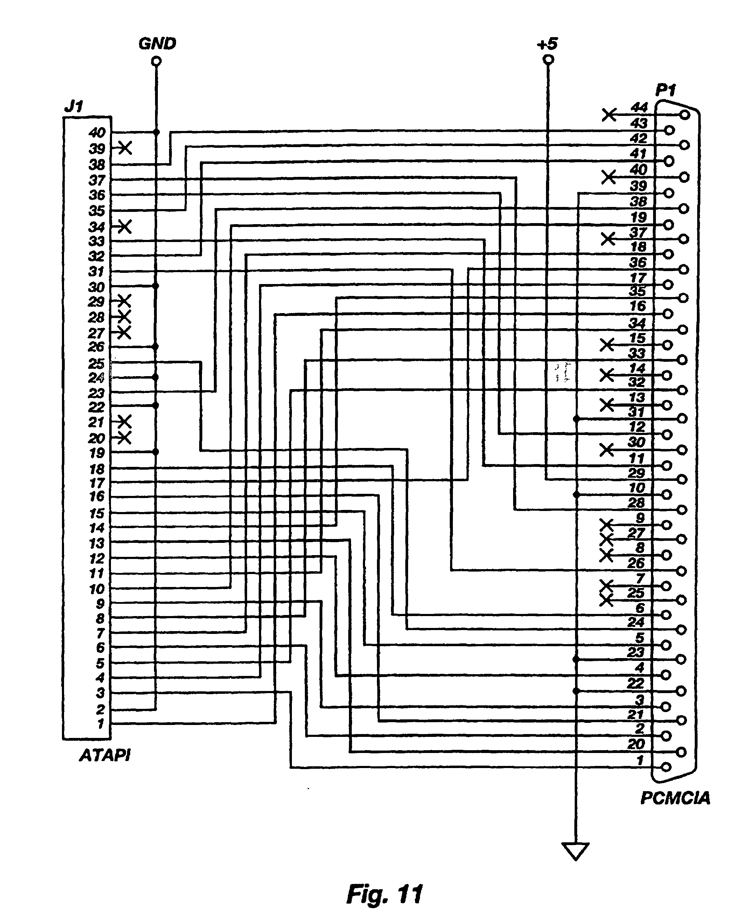

Figure 11 is a detailed schematic diagram showing one preferred arrangement for adapting a peripheral device to the PCMCIA standard. The components represented in figure 11 carry out the functions of the coupling device 24 represented in figure 2 and the components represented in figure 11 can most preferably be housed within a PC card format.

The schematic diagram of figure 11 is only one example of a means for translating communications between a computer in accordance with the first interface standard and the peripheral device in compliance with the second interface standard such that an operative link between the computer and the peripheral device is established when a computer peripheral is nested in the peripheral bay. It is to be understood that many different structures can carry out the functions of means for translating communications between a computing device in accordance with the first interface standard and the peripheral device in compliance with the second interface standard and all such structures and arrangements which perform the same or equivalent functions are to be considered within the scope of the means for translating communications between a computer in accordance with the first interface standard and the peripheral device in compliance with the second interface standard.

The arrangement represented in the detailed schematic diagram of figure 11 is most preferred for translating between the well known ATAPI interface standard and the PCMCIA interface standard. As can be appreciated from an examination of the detailed schematic diagram of figure 11, the arrangement represented in figure 11 does not require any active components to provide the desired translation. It is also possible to provide means for translating communications which includes active components which can modify existing signals, and create new signals, which are necessary to translate between interface standards. For example, those skilled in the art can arrive at means for translating communications between any of following interface standards: PCCard, PCI, Parallel, IEEE 488, Serial, RS-232, PS/2, PCMCIA, CardBus, FireWire, IDE, ATAPI interfaces; using the teachings provided herein.

In view of the forgoing, it will be appreciated that it has been shown how to interconnect computer peripherals and computer systems and to simultaneously connect multiple portable computer peripherals to a single portable computer interface slot so that peripheral swapping is unnecessary. It has been also shown how to connect any of a number of proprietary portable computer peripherals to a single computer interface slot, for connecting portable computer peripherals to a desktop computer so that these peripherals can be shared by both the portable computer and the desktop computer, and to connect any of a number of proprietary portable computer peripherals to a desktop computer to reduce peripheral redundancy and thereby reduce the cost of peripheral systems to the user.

It has been further shown how to connect a drive using high density, portable and removable mass storage media to a portable computer so that the portable computer can take advantage of convenient and inexpensive mass storage, and specifically how to provide a system and method which uses a ZIP™ drive with removable ZIP™ disks as the high density, portable and removable mass storage media. The present invention provides a system for efficiently powering the computer peripherals.

## Claims

1. A system for providing power to a digital peripheral device when a primary power supply provides insufficient power, the system comprising:
means (10) for removably housing the peripheral device, the peripheral device (12) including at least a first electrical connector for communicating at least a first electrical signal;
means (24) for coupling the first electrical signal between the peripheral device and a computing device, the computing device including a primary power supply;
means for conveying electrical power from the primary power supply to the peripheral device;
means (160) for storing electrical power,
positioned outside of the computing device;
**characterized in that**
said system further comprises a power management circuit means (158) being capable of detecting when the current drawn by the peripheral device exceeds a predetermined threshold and, responsive thereto, being capable of supplying supplementary power to the peripheral device when the current drawn by the peripheral device exceeds the predetermined threshold such that the operation of the peripheral device is maintained;
said circuit means being adapted to provide supplementary power by supplying additional current to the peripheral device from the means for storing electrical power in order to supplement the current provided by the primary power supply.

2. A system as defined in claim 1, **characterized in that**
the means (10) for removably housing the peripheral device (12) comprises either an internal or external docking bay.

3. A system as defined in claim 1 or 2, **characterized in that**
the computing device (14, 150) comprises one of the following devices:
a desktop computer, a notebook computer, a palmtop computer, a personal digital assistant, a digital camera;
the peripheral device (12) comprises either a magnetic storage device or an optical storage device.

4. A system as defined in one of claims 1-3, **characterized in that**
the means for coupling the first electrical signal between the peripheral device and the computing device comprises a cable (22).

5. A system as defined in one of claims 1-4, **characterized in that**
the power supply provides 5 volts DC.

6. A system as defined in one of claims 1-5, **characterized in that**
the means for conveying electrical power from the primary power supply to the peripheral device (12) comprises a cable (22).

7. A system as defined in one of claims 1-6, **characterized in that**
the system comprises an enclosure (122) within which the peripheral device is housed;
the means for storing electrical power comprises a rechargeable battery positioned within the enclosure.

8. A system as defined in one of the claims 1-6, **characterized in that**
the system comprises an enclosure within which the peripheral device is housed;
the means for storing electrical power comprises a rechargeable battery positioned outside of the enclosure.

9. A system as defined in one of claims 1-8, **characterized in that**
the means (158) for detecting when the current drawn by the peripheral device (12) exceeds a predetermined threshold comprises means for detecting when the current drawn by the peripheral device exceeds a current value in the range from about 600 mA to about 700 mA.

10. A system as defined in one of claims 1-8, **characterized in that**
the means (158) for detecting when the current drawn by the peripheral device (12) exceeds a predetermined threshold comprises means for detecting when the current drawn by the peripheral device exceeds a current value in the range from about 50 mA to about 200 mA.

11. A system as defined in one of claims 1-8, **characterized in that**
the means (158) for detecting when the current drawn by the peripheral device (12) exceeds a predetermined threshold comprises means for detecting when the current drawn by the peripheral device exceeds a current value equal to about 650 mA.

12. A system as defined in one of claims 1-11, **characterized in that**
the power management circuit means (158) for detecting when the current drawn by the peripheral device (12) exceeds a predetermined threshold and for supplying supplementary power to the peripheral device comprises:
a first operational amplifier (U1B) having an input connected to a first power input (1) of the peripheral device (12) for sensing the current drawn by the peripheral device; and
a switching device (Q1) in series with the means for storing electrical power (BT1) and connected to a second power input of the peripheral device (2).

13. A system as defined in one of claims 1-12, **characterized in that**
the first electrical connector comprises a forty conductor connector.

14. A system as defined in one of claims 1-13, **characterized in that**
the system comprises means for translating communications between the computing device (12) in accordance with a first interface standard and the peripheral device in compliance with a second interface standard such that an operative link between the computing device and the peripheral device is established when the peripheral device is nested in a first peripheral bay.

15. The system as defined in one of claims 1-14, **characterized in that**
the means (10) for removably housing the peripheral device is positioned externally to the computing device.

16. The system as defined in claim 14, **characterized in that**
the first peripheral bay is positioned internally in the computing device.

17. The system as defined in one of claims 1-16, **characterized in that**
the means for making physical and electrical connection with the peripheral device comprises a fifty conductor connector and a cable.

18. The system as defined in one of claims 1-17, **characterized in that**
the peripheral device comprises an enclosure having first, second, third and fourth sides, the enclosure having a substantially rectangular shape having a lip extending from the first side thereof.

19. The system as defined in claim 14, **characterized in that**
the first interface standard is the PCMCIA interface standard.

20. The system as defined in claim 14, **characterized in that**
the second interface standard is ATAPI interface standard.

## Patentansprüche

1. System zur Bereitstellung von Energie für eine digitale Peripherievorrichtung, wenn eine Primär-Energiequelle nicht genügend Energie bereitstellt, wobei das System umfasst:
eine Einrichtung (10) zum herausnehmbaren Aufnehmen der Peripherievorrichtung, wobei die Peripherievorrichtung (12) wenigstens einen ersten elektrischen Verbinder zum Übertragen wenigstens eines ersten elektrischen Signals enthält;
eine Einrichtung (24) zum Koppeln des ersten elektrischen Signals zwischen die Peripherievorrichtung und eine Datenverarbeitungsvorrichtung, wobei die Datenverarbeitungsvorrichtung eine Primär-Energiequelle enthält;
eine Einrichtung zum Befördern von elektrischem Strom von der Primär-Energiequelle zu der Peripherievorrichtung;
eine Einrichtung (160) zum Speichern von elektrischer Energie, die außerhalb der Datenverarbeitungsvorrichtung angeordnet ist;
**dadurch gekennzeichnet, dass:**
das System des Weiteren eine Power-Management-Schaltungseinrichtung (158) umfasst, die in der Lage ist, zu erfassen, wenn der durch die Peripherievorrichtung gezogene Strom einen vorgegebenen Schwellenwert übersteigt, und in Reaktion darauf in der Lage ist, der Peripherievorrichtung zusätzliche Energie zuzuführen, wenn der durch die Peripherievorrichtung gezogene Strom den vorgegebenen Schwellenwert übersteigt, so dass der Betrieb der Peripherievorrichtung aufrechterhalten wird;
wobei die Schaltungseinrichtung so eingerichtet ist, dass sie zusätzliche Energie bereitstellt, indem sie der Peripherievorrichtung von der Einrichtung zum Speichern von elektrischer Energie zusätzlichen Strom zuführt, um den durch die Primär-Energiequelle bereitgestellten Strom zu ergänzen.

2. System nach Anspruch 1, **dadurch gekennzeichnet, dass**:
die Einrichtung (10) zum herausnehmbaren Aufnehmen der Peripherievorrichtung (12) eine interne oder externe Docking-Station umfasst.

3. System nach Anspruch 1 oder 2, **dadurch gekennzeichnet, dass**:
die Datenverarbeitungsvorrichtung (14, 150) eine der folgenden Vorrichtungen umfasst:
einen Desktop-Computer, einen Notebook-Computer, einen Palmtop-Computer, einen PDA, eine Digitalkamera;
wobei die Peripherievorrichtung (12) entweder eine magnetische Speichervorrichtung oder eine optische Speichervorrichtung umfasst.

4. System nach einem der Ansprüche 1-3, **dadurch gekennzeichnet, dass**:
die Einrichtung zum Koppeln des ersten elektrischen Signals zwischen die Peripherievorrichtung und die Datenverarbeitungsvorrichtung ein Kabel (22) umfasst.

5. System nach einem der Ansprüche 1-4, **dadurch gekennzeichnet, dass** die Energiequelle 5 Volt Gleichspannung bereitstellt.

6. System nach einem der Ansprüche 1-5, **dadurch gekennzeichnet, dass**:
die Einrichtung zum Transportieren elektrischer Energie von der Primär-Energiequelle zu der Peripherievorrichtung (12) ein Kabel (22) umfasst.

7. System nach einem der Ansprüche 1-6, **dadurch gekennzeichnet, dass**:
das System eine Einfassung (122) umfasst, in der die Peripherievorrichtung aufgenommen wird;
die Einrichtung zum Speichern elektrischer Energie eine wiederaufladbare Batterie umfasst, die in der Einfassung angeordnet ist.

8. System nach einem der Ansprüche 1-6, **dadurch gekennzeichnet, dass**:
das System eine Einfassung umfasst, in der die Peripherievorrichtung aufgenommen wird;
die Einrichtung zum Speichern elektrischer Energie eine wiederaufladbare Batterie umfasst, die außerhalb der Einfassung angeordnet ist.

9. System nach einem der Ansprüche 1-8, **dadurch gekennzeichnet, dass**:
die Einrichtung (158), die erfasst, wenn der durch die Peripherievorrichtung (12) gezogene Strom einen vorgegebenen Schwellenwert übersteigt, eine Einrichtung umfasst, die erfasst, wenn der durch die Peripherievorrichtung gezogene Strom einen Stromwert im Bereich zwischen ungefähr 600 mA und ungefähr 700 mA übersteigt.

10. System nach einem der Ansprüche 1-8, **dadurch gekennzeichnet, dass**:
die Einrichtung (158), die erfasst, wenn der durch die Peripherievorrichtung (12) gezogene Strom einen vorgegebenen Schwellenwert übersteigt, eine Einrichtung umfasst, die erfasst, wenn der durch die Peripherievorrichtung gezogene Strom einen Stromwert im Bereich zwischen ungefähr 50 mA und ungefähr 200 mA übersteigt.

11. System nach einem der Ansprüche 1-8, **dadurch gekennzeichnet, dass** die Einrichtung (158), die erfasst, wenn der durch die Peripherievorrichtung (12) gezogene Strom einen vorgegebenen Schwellenwert übersteigt, eine Einrichtung umfasst, die erfasst, wenn der durch die Peripherievorrichtung gezogene Strom einen Stromwert übersteigt, der ungefähr 650 mA entspricht.

12. System nach einem der Ansprüche 1-11, **dadurch gekennzeichnet, dass**:
die Power-Management-Schaltungseinrichtung (158), die erfasst, wenn der durch die Peripherievorrichtung (12) gezogene Strom einen vorgegebenen Schwellenwert übersteigt, und die der Peripherievorrichtung zusätzliche Energie zuführt, umfasst:
einen ersten Operationsverstärker (U1B) mit einem Eingang, der mit einem ersten Energieeingang (1) der Peripherievorrichtung (12) verbunden ist, um den durch die Peripherievorrichtung gezogenen Strom zu messen; und
eine Schaltvorrichtung (Q1), die in Reihe mit der Einrichtung zum Speichern elektrischer Energie (BT1) geschaltet ist und mit einem zweiten Energieeingang der Peripherievorrichtung (2) verbunden ist.

13. System nach einem der Ansprüche 1-12, **dadurch gekennzeichnet, dass**:
der erste elektrische Verbinder einen 40-Leiter-Verbinder umfasst.

14. System nach einem der Ansprüche 1-13, **dadurch gekennzeichnet, dass**:
das System eine Einrichtung zum Umsetzen von Verbindungen zwischen der Datenverarbeitungsvorrichtung (12) entsprechend einem ersten Schnittstellen-Standard und der Peripherievorrichtung gemäß einem zweiten Schnittstellen-Standard umfasst, so dass eine funktionelle Verbindung zwischen der Datenverarbeitungsvorrichtung und der Peripherievorrichtung hergestellt wird, wenn die Peripherievorrichtung in einer ersten Peripherie-Station aufgenommen ist.

15. System nach einem der Ansprüche 1-14, **dadurch gekennzeichnet, dass**:
die Einrichtung (10) zum herausnehmbaren Aufnehmen der Peripherievorrichtung außerhalb der Datenverarbeitungsvorrichtung angeordnet ist.

16. System nach Anspruch 14, **dadurch gekennzeichnet, dass**:
die erste Peripherie-Station innerhalb der Datenverarbeitungsvorrichtung angeordnet ist.

17. System nach einem der Ansprüche 1-16, **dadurch gekennzeichnet, dass**:
die Einrichtung zum Herstellen physischer und elektrischer Verbindung mit der Peripherievorrichtung einen 50-Leiter-Verbinder und ein Kabel umfasst.

18. System nach einem der Ansprüche 1-17, **dadurch gekennzeichnet, dass**:
die Peripherievorrichtung eine Einfassung mit einer ersten, einer zweiten, einer dritten und einer vierten Seite umfasst, wobei die Einfassung eine im Wesentlichen rechteckige Form mit einem Rand hat, der sich von der ersten Seite derselben erstreckt.

19. System nach Anspruch 14, **dadurch gekennzeichnet, dass**:
der erste Schnittstellen-Standard der PCMCIA-Schnittstellen-Standard ist.

20. System nach Anspruch 14, **dadurch gekennzeichnet, dass**:
der zweite Schnittstellen-Standard der ATAPI-Schnittstellen-Standard ist.

## Revendications

1. Système destiné à alimenter en énergie un dispositif périphérique numérique lorsqu'une alimentation principale ne procure qu'une énergie insuffisante, le système comprenant :
un moyen (10) destiné à loger de façon amovible le dispositif périphérique, le dispositif périphérique (12) comprenant au moins un premier connecteur électrique destiné à communiquer au moins un premier signal électrique,
un moyen (24) destiné à coupler le premier signal électrique entre le dispositif périphérique et un dispositif informatique, le dispositif informatique comprenant une alimentation principale,
un moyen destiné à transporter l'alimentation électrique depuis l'alimentation principale vers le dispositif périphérique,
un moyen (160), destiné à stocker de l'énergie électrique, situé à l'extérieur du dispositif informatique,
**caractérisé en ce que**
ledit système comprend en outre un moyen de circuit de gestion d'énergie (158) qui peut détecter lorsque le courant consommé par le dispositif périphérique dépasse un seuil prédéterminé et, en réponse à cela, qui est capable de fournir de l'énergie supplémentaire au dispositif périphérique lorsque le courant consommé par le dispositif périphérique dépasse le seuil prédéterminé de manière à ce que le fonctionnement du dispositif périphérique soit maintenu,
ledit moyen de circuit étant conçu pour procurer de l'énergie supplémentaire en fournissant un courant supplémentaire au dispositif périphérique depuis le moyen destiné à stocker de l'énergie électrique de manière à compléter le courant fourni par l'alimentation principale.

2. Système selon la revendication 1, **caractérisé en ce que**
le moyen (10) destiné à loger de façon amovible le dispositif périphérique (12) comprend un emplacement de rangement soit interne, soit externe.

3. Système selon la revendication 1 ou 2, **caractérisé en ce que**
le dispositif informatique (14, 150) comprend l'un des dispositifs suivants :
un ordinateur de bureau, un ordinateur de type bloc-notes, un ordinateur de poche, un assistant numérique personnel, un appareil de prise de vues numérique,
le dispositif périphérique (12) comprend soit un dispositif de stockage magnétique, soit un dispositif de stockage optique.

4. Système selon l'une des revendications 1 à 3,
**caractérisé en ce que**
le moyen destiné à coupler le premier signal électrique entre le dispositif périphérique et le dispositif informatique comprend un câble (22).

5. Système selon l'une des revendications 1 à 4,
**caractérisé en ce que**
l'alimentation fournit 5 volts en courant continu.

6. Système selon l'une des revendications 1 à 5,
**caractérisé en ce que**
le moyen destiné à transporter de l'énergie électrique depuis l'alimentation principale vers le dispositif périphérique (12) comprend un câble (22).

7. Système selon l'une des revendications 1 à 6,
**caractérisé en ce que**
le système comprend une enceinte (122) à l'intérieur de laquelle est logé le dispositif périphérique,
le moyen destiné à stocker de l'énergie électrique comprend une batterie rechargeable placée à l'intérieur de l'enceinte.

8. Système selon l'une des revendications 1 à 6,
**caractérisé en ce que**
le système comprend une enceinte à l'intérieur de laquelle est logé le dispositif périphérique,
le moyen destiné à stocker de l'énergie électrique comprend une batterie rechargeable placée à l'extérieur de l'enceinte.

9. Système selon l'une des revendications 1 à 8,
**caractérisé en ce que**
le moyen (158) destiné à détecter lorsque le courant consommé par le dispositif périphérique (12) dépasse un seuil prédéterminé comprend un moyen destiné à détecter lorsque le courant consommé par le dispositif périphérique dépasse une valeur de courant dans la plage d'environ 600 mA à environ 700 mA.

10. système selon l'une des revendications 1 à 8,
**caractérisé en ce que**
le moyen (158) destiné à détecter lorsque le courant consommé par le dispositif périphérique (12) dépasse un seuil prédéterminé comprend un moyen destiné à détecter lorsque le courant consommé par le dispositif périphérique dépasse une valeur de courant dans la plage d'environ 50 mA à environ 200 mA.

11. Système selon l'une des revendications 1 à 8,
**caractérisé en ce que**
le moyen (158) destiné à détecter lorsque le courant consommé par le dispositif périphérique (12) dépasse un seuil prédéterminé comprend un moyen destiné à détecter lorsque le courant consommé par le dispositif périphérique dépasse une valeur de courant égale à environ 650 mA.

12. Système selon l'une des revendications 1 à 11,
**caractérisé en ce que**
le moyen de circuit de gestion d'énergie (158) destiné à détecter lorsque le courant consommé par le dispositif périphérique (12) dépasse un seuil prédéterminé et destiné à fournir une énergie supplémentaire au dispositif périphérique comprend :
un premier amplificateur opérationnel (U1B) ayant une entrée reliée à une première entrée d'alimentation (1) du dispositif périphérique (12) afin de détecter le courant consommé par le dispositif périphérique, et
un dispositif de commutation (Q1) en série avec le moyen destiné à stocker de l'énergie électrique (BT1) et relié à une seconde entrée d'alimentation du dispositif périphérique (2).

13. Système selon l'une des revendications 1 à 12,
**caractérisé en ce que**
le premier connecteur électrique comprend un connecteur à quarante conducteurs.

14. Système selon l'une des revendications 1 à 13,
**caractérisé en ce que**
le système comprend un moyen destiné à transposer des communications entre le dispositif informatique (12) conformément à un premier standard d'interface et le dispositif périphérique se conformant à un second standard d'interface, de sorte qu'une liaison fonctionnelle entre le dispositif informatique et le dispositif périphérique est établie lorsque le dispositif périphérique est logé dans un premier emplacement de périphérique.

15. Système selon l'une des revendications 1 à 14,
**caractérisé en ce que**
le moyen (10) destiné à loger de façon amovible le dispositif périphérique est placé de façon externe au dispositif informatique.

16. Système selon la revendication 14, **caractérisé en ce que**
le premier emplacement de périphérique est situé de façon interne dans le dispositif informatique.

17. Système selon l'une des revendications 1 à 16,
**caractérisé en ce que**
le moyen destiné à établir une connexion physique et électrique avec le dispositif périphérique comprend un connecteur à cinquante conducteurs et un câble.

18. Système selon l'une des revendications 1 à 17,
**caractérisé en ce que**
le dispositif périphérique comprend une enceinte comportant des premier, second, troisième et quatrième côtés, l'enceinte présentant une forme globalement rectangulaire comportant une lèvre se prolongeant depuis son premier côté.

19. Système selon la revendication 14, **caractérisé en ce que**
le premier standard d'interface est le standard d'interface PCMCIA.

20. Système selon la revendication 14, **caractérisé en ce que**
le second standard d'interface est le standard d'interface ATAPI.
